# DEMANDE DE BREVET EUROPEEN

(11) **EP 1 464 648 A1**
(43) Date de publication de la demande: **06.10.2004**
(21) Numéro de dépôt: 04290777.4
(22) Date de dépôt: 23.03.2004
(51) Int. Cl.: C07F 9/40, C08F 4/00

(54) **Alcoxyamines beta-phosporees et leur utilisation pour la preparation de polymères alpha-omega fonctionnels**

(30) Priorité: 01.04.2003 FR 0303999
(71) Demandeur: Atofina, 92800 Puteaux (FR)
(72) Inventeur: Couturier, Jean-Luc, 69006 Lyon (FR); Guerret, Olivier, 64230 Mazerolles (FR)
(74) Mandataire: Treuil, Claude

(57) **Abrégé**

L'invention concerne l'utilisation d'alcoxyamines de formule (I) : 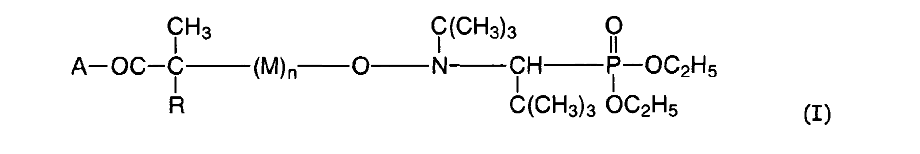 pour la préparation de mono- ou polyalcoxyamines polymérisées ou non de formule (II) :

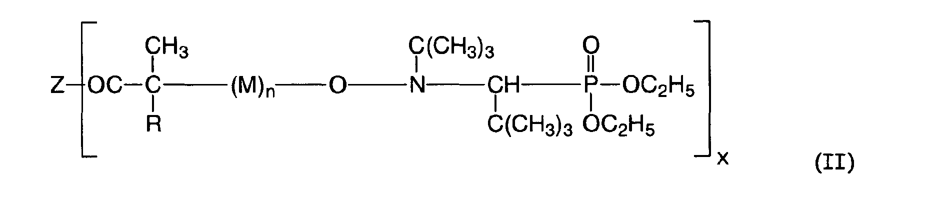

## Description

L'invention a pour objet l'utilisation d'alcoxyamines issues de nitroxydes β-phosphorées de formule (I): 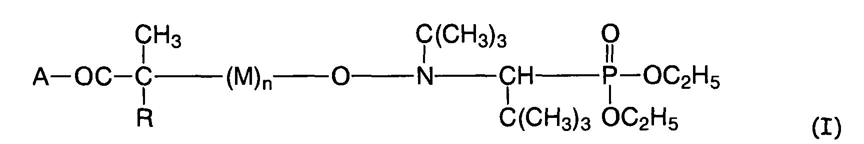 dans laquelle A représente un radical hydroxy, un radical R¹O- dans lequel R¹ représente un reste alkyle, linéaire ou ramifié, ayant un nombre d'atome de carbone allant de 1 à 6 ; un radical MeO- dans lequel Me représente un métal alcalin tel que Li, Na, K, un radical H₄N⁺ -, Bu₄N⁺-, Bu₃HN⁺- ; un atome de chlore ; R représente un atome d'hydrogène ou bien un radical méthyle; M est un enchaînement de monomères vinyliques polymérisables par voie radicalaire; n est un nombre entier pouvant être égal à 0 ; pour la préparation de mono- ou polyalcoxyamines, polymérisées ou non, de formule (II): 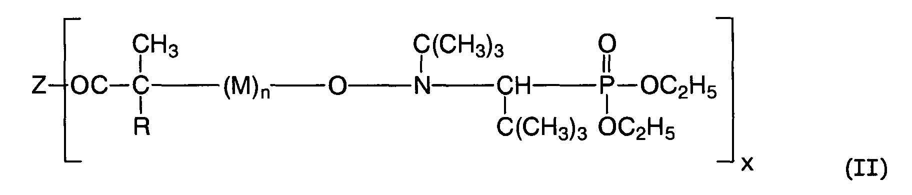 dans laquelle Z représentant une structure mono- ou polyfonctionnelle sera plus amplement définie plus loin ; x est un nombre entier au moins égal à un.

Dans la demande de brevet européen EP 903787, il est connu des alcoxyamines issues de nitroxydes β-phosphorés utilisées comme amorceurs de polymérisations radicalaires procurant un bon contrôle de la polymérisation (contrôle des masses, polydispersités faibles) dans le cas de nombreux monomères vinyliques: styrène et styrènes substitués, diènes, monomères acryliques ou méthacryliques, acrylonitrile.

La demanderesse a trouvé que les fonctions réactives de type ester présentes sur ces sur ces alcoxyamines, ainsi que les fonctions dérivées tels que fonction acide, sel d'acide ou chlorure d'acide, permettaient de réaliser facilement des transformations chimiques soit sur l'alcoxyamine initiale, soit sur le polymère issu de cette alcoxyamine. La transformation de l'alcoxyamine initiale donne accès à une nouvelle alcoxyamine et permet l'adaptation de l'amorceur à l'application visée. En particulier, cette transformation peut permettre de synthétiser des polyalcoxyamines à partir de monoalcoxyamine. La transformation du polymère issu de l'alcoxyamine permet d'introduire de nouveaux groupements fonctionnels ou permet des réactions de couplage avec un autre polymère. En particulier, cette transformation peut permettre d'accéder à des copolymères blocs impliquant des blocs qui ne sont pas accessibles par polymérisation radicalaire.

L'invention a donc pour objet l'utilisation des alcoxyamines de formule (I): 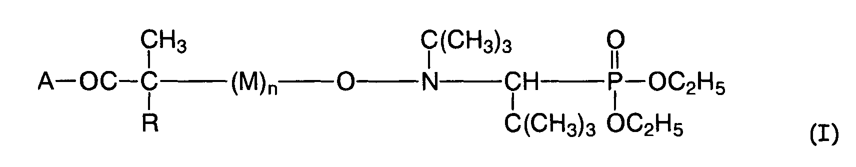 dans laquelle A représente un radical hydroxy, un radical R¹O- dans lequel R1 représente un reste alkyle, linéaire ou ramifié, ayant un nombre d'atome de carbone allant de 1 à 6 ; un radical MeO- dans lequel Me représente un métal alcalin tel que Li, Na, K ; un radical H4N+-, Bu4N+-, Bu3HN+- ; un atome de chlore; R représente un atome d'hydrogène ou bien un radical méthyle; M est un enchaînement de monomères vinyliques polymérisables par voie radicalaire ; n est un nombre entier pouvant être égal à 0 ; pour la préparation de mono- ou polyalcoxyamines, polymérisées ou non, de formule (II): 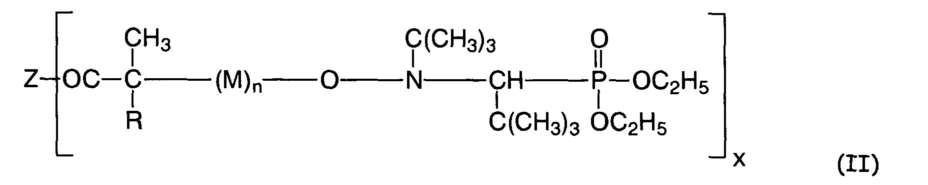 dans laquelle R et n ont la même signification que dans la formule (I) ; x est un nombre entier au moins égal à 1 ; Z représente une structure mono- ou polyfonctionnelle choisie parmi les structures ci-après données à titre non limitatif : CH₂=CH-CH₂-O- , CH2=CH-CH2-NH-, CH₃-(OCH₂CH₂)p-O-, -O-(CH₂)q-O-, p et q étant des nombres entiers au moins égal à un, ou plus généralement provenant de composés de type alcools, polyols, amines, polyamines, époxydes, polyépoxydes, esters, polyesters, amides, polyamides, imines, polyimines, polycarbonates, polyuréthanes, silicones.

A titre non limitatif de monomères vinyliques M utilisables selon la présente invention, on citera le styrène, les styrènes substitués, les diènes, les monomères acryliques comme l'acide acrylique ou les acrylates d'alkyle, les monomères méthacryliques comme l'acide méthacrylique ou les méthacrylates d'alkyle, l'acrylonitrile, l'acrylamine et ses dérivés, la vinylpyrrolidinone ou encore un mélange d'au moins deux monomères précités.

Les alcoxyamines de formule (I) dans laquelle A représente un radical R¹O-sont connues.

L' invention a donc également pour objet les alcoxyamines de formule (I), à l'exclusion des alcoxyamines de formule (I) dans laquelle A représente un radical R¹O-.

Les composés (I) dans lesquels A est OR¹ peuvent être obtenus selon une méthode décrite dans la demande brevet européen EP 903787.

Les composés dans lesquels A est OH et n=0 peuvent être préparés selon des méthodes connues dans la littérature. La méthode la plus courante implique le couplage d'un radical carboné avec un radical nitroxyde. On peut utiliser la méthode mettant en jeu la réaction dite ATRA (Atom Transfer Radical Addition), comme décrite dans la demande de brevet française 2791979 intégrée dans la présente par référence.

Cette méthode consiste à faire réagir un nitroxyde de formule (III): 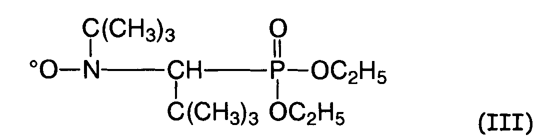 avec un dérivé halogéné de formule (IV) : 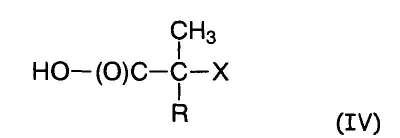 dans laquelle X représente un atome de chlore ou un atome de brome, R ayant la même signification que dans la formule (I) en milieu solvant organique non miscible à l'eau en présence d'un système organométallique de formule Métal Y(L)r, dans laquelle le Métal est le cuivre, Y représente un atome de chlore ou un atome de brome,
L représente un ligand du métal, et est choisi parmi des polyamines telles que:
- la tris[2-(diméthylamino)éthyl]amine: 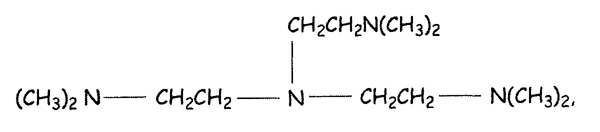
- la N, N, N', N', N" ― pentaméthyldiéthylènetriamine (PMDETA) : 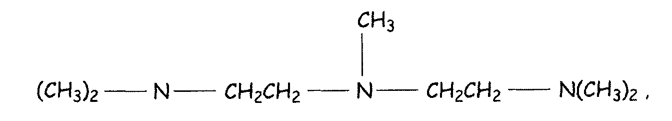
- la N,N,N',N'-tetraméthyléthylènediamine:

   (CH₃)₂― N― CH₂CH₂ ― N― (CH₃)₂,
- la 1, 1, 4, 7,10, 10-hexaméthyltriéthylènetétramine (HMTETA) : 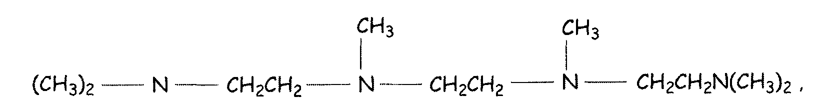
les polyamines cycliques telles que:
- le 1,4,7-triméthyl-1,4,7-triazacyclononane,
- le 1,5,9-triméthyl-1,5,9-triazacyclododécane,
- le 1,4,8,11-tétraméthyl-1,4,8,11-tétraazacyclotétradécane,
en mélangeant sous agitation dans le solvant organique un sel métallique Métal-Y, le ligand L, le dérivé halogéné (IV) et le nitroxyde (III) selon un rapport molaire (IV) / (III) allant de 1 à 1,4 et en maintenant le milieu réactionnel sous agitation à une température comprise entre 0°C et 40°C jusqu'à disparition complète du nitroxyde (III), puis en récupérant la phase organique qui est lavée avec de l'eau, puis en isolant l'alcoxyamine (I) par évaporation du solvant organique sous pression réduite.

Comme solvant organique, on utilisera de préférence un hydrocarbure aromatique ou un dérivé chloré tel que le CH₂Cl₂.

Le sel métallique utilisé de préférence est CuBr.

On peut également introduire dans le milieu réactionnel CuBr (dans lequel le cuivre est au degré d'oxydation 1) et du cuivre.

Les sels alcalins des alcoxymines (I) (A= MeO-) peuvent être obtenus aisément en dissolvant, à froid, l'alcoxyamine (I) sous forme acide dans un minimum de méthanol puis on ajoute 1,05 équivalent d'hydroxyde alcalin dans un minimum d'eau. Le mélange eau / méthanol est évaporé sous pression réduite et l'eau restant est éliminée azéotropiquement au moyen du cyclohexane ou du benzène.

Les composés (I) dans lesquels A est égal à Cl peuvent être obtenus par mise en réaction du composé (I) dans lequel A est égal à OH avec du chlorure de thionyle.

Les composés (I) dans lesquels n=0 et R=H peuvent être introduits comme amorceurs-contrôleurs de polymérisation pour accéder au composés (I) ou n est différent de 0.

Les composés de formule (II) peuvent être obtenus de préférence par des réactions d'estérification, de transestérification, d'amidification, de transamidification et d'ouverture d'époxydes. On ne sortirait pas du cadre de l'invention si, pour les réactions d'estérification ou d'amidification, on utilisait intermédiairement un chlorure d'acide.

Les procédés d'estérification peuvent en particulier être utilisés avantageusement pour préparer des polyalcoxyamines à partir des monoalcoxyamines.

Les procédés d'estérification et d'amidification peuvent également être utilisés avantageusement pour condenser des polymères qui ne sont pas obtenus par polymérisation radicalaire comme les polyesters, les polyamides ou les polyépoxydes. Ces réactions permettent ainsi d'accéder à de multiples structures de copolymères à blocs comme polystyrène-polyester, polystyrène-polyamide, polystyrène-polyépoxyde, polyacrylate-polyester, polyacrylate-polyamide, polyacrylate-polyépoxyde.

A titre d'illustration, de telles réactions peuvent être schématisées comme ci-après :

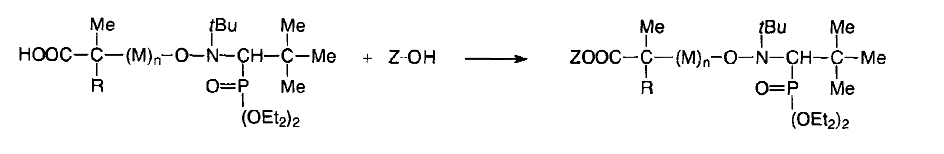

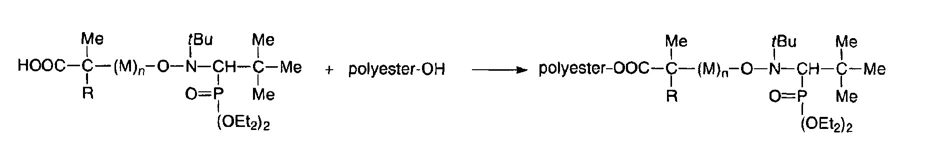

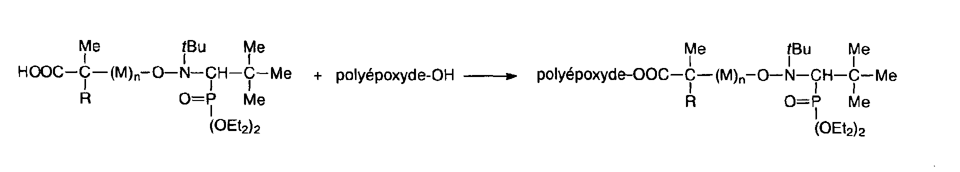

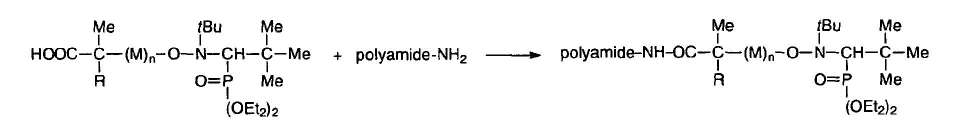

En général, pour rendre un polymère réactif, l'homme de l'art utilise généralement soit une technique de greffage radicalaire soit une technique faisant intervenir un amorceur fonctionnel par exemple de type azoïque. Ces techniques ne sont pas complètement satisfaisantes. La première méthode conduit à une distribution aléatoire des fonctions réactives sur les chaînes. La seconde est limitée par l'efficacité d'amorçage de l'amorceur utilisé (qui n'est pas égale à 1) et par le fait que les chaînes initiées peuvent se terminer par couplage ou transfert (ce qui engendre des chaînes portant 0, 1 ou 2 fonctionnalités).

L'invention présente donc en particulier l'avantage de produire et d'utiliser des polymères dont la fonctionnalité de bouts de chaînes est parfaitement contrôlée.

Les exemples qui suivent illustrent l'invention:

### Exemple 1:

### Préparation de l'acide 2-[N-tertiobutyl-N-(1-diéthoxyphosphoryl-2,2-diméthylpropyl)aminoxy] propionique, désigné ci-après par AA-SG1 par hydrolyse du N-tertiobutyl, N-1-diéthylphophono-2,2-diméthylpropyl, O-1 méthoxycarbonyléthylhydroxylamine, ci-après MONAMS selon la réaction:

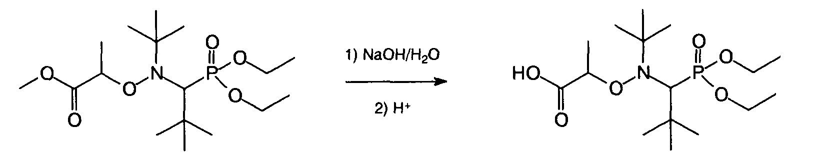

La MONAMS est préparée selon la demande de brevet européen EP 903787.

Dans un ballon de 100 ml, on met 3 g de MONAMS (7,9 mmol) dissous dans 45 ml de méthanol. On ajoute 0,4 g de soude (10 mmol) dissous dans 30 ml d'eau. On laisse réagir 24 h à 50°C. Le mélange réactionnel est extrait à l'éther. La phase aqueuse résultante est acidifiée à pH=2 avec HCl 5N, puis extraite au dichorométhane. La phase organique est évaporée sous vide pour donner 2,6 g de la forme acide de l'alcoxyamine notée AA-SG1 sous forme d'une poudre blanche (rendement = 90%).

### Caractérisation de l'acide 2-[N-tertiobutyl-N-(1-diéthoxyphosphoryl-2,2-diméthyl-propyl) aminoxy] propionique;

Tf = 145°C
RMN ³¹P (121.59 MHz, CDCl₃) : 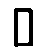 27.65 (s, Dia I, 65%). 24.60 (s, Dia II, 35%).
RMN ¹H (300 MHz, CDCl₃) : Dia I. 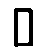 4.68 (q, J = 6 Hz, 1H). 3.90-4.35 (m, 4H), 3.38 (d, J = 27 Hz, 1H), 1.61 (d, J = 6 Hz, 3H), 1.34 (m, 6H), 1.20 (s, 9H), 1.19 (s, 9H).
Dia II. 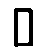 4.54 (q, J = 9 Hz, 1H), 3.90-4.35 (m, 4H), 3.38 (d, J = 27 Hz, 1H), 1.49 (d, J = 9 Hz, 3H), 1.31 (t, J = 9Hz, 6H), 1.17 (s, 9H), 1.12 (s, 9H).
RMN ¹³C ( 75.54 MHz, CDCl₃) : Dia I. 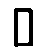 174,17 (s, COOH), 81.46 (s, CH-O), 68.12 (d, J = 139 Hz, CH-P), 62.53 (s, N-C(CH₃)₃), 62.65 (d, J = 5.28 Hz, CH₂), 59.86 (d, J = 7.55 Hz, CH₂), 35.54 (d, J = 4.53 Hz, CH-C(CH₃)₃), 30.24 (d, J = 6.8 Hz, CH-C(CH₃)₃), 27.80 (s, N-C(CH₃)₃), 19.35 (s, CH-CH₃), 16.31 (d, J = 5.29 Hz, CH₂CH₃), 16.04 (d, J = 6.8 Hz, CH₂CH₃). Dia II. 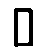 174,78 (s, COOH), 81.31 (s, CH-O), 69.47 (d, J = 141.26 Hz, CH-P), 62.53 (s, N-C(CH₃)₃), 62.22 (d, J = 6.8 Hz, CH₂), 59.86 (d, J = 7.55 Hz, CH₂), 35.59 (d, J = 2.26 Hz, CH-C(CH₃)₃), 29.85 (d, J = 6.04 Hz, CH-C(CH₃)₃), 27.72 (s, N-C(CH₃)₃), 18.43 (s, CH-CH₃), 16.35 (d, J = 6.8 Hz, CH₂CH₃), 16.13 (d, J = 6.8 Hz, CH₂CH₃).

### Exemple 2 :

### Estérification de l'AA-SG1

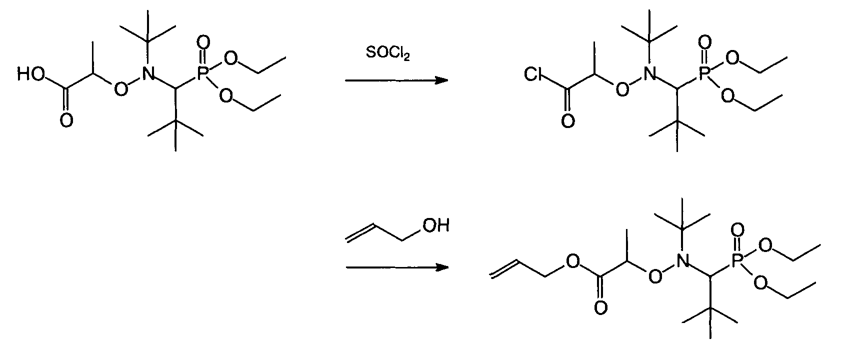

Dans un ballon de 100 ml sous atmosphère d'azote, on met 2 g d'AA-SG1 (5,4 mmol) dissous dans 25 ml de dichlorométhane préalablement séché sur tamis moléculaire. On ajoute 1,9 g de chlorure de thionyle (16,2 mmol) et on laisse réagir 45 minutes à température ambiante. Le mélange réactionnel est évaporé sous vide pour donner le chlorure d'acide de l'alcoxyamine sous forme d'une huile qui est utilisée dans la suite sans purification supplémentaire.

Le chlorure d'acide obtenu précédemment est redissous dans 30 ml d'éther éthylique (préalablement séché par distillation sur sodium-benzophénone). A température ambiante, on ajoute un mélange contenant 0,62 g d'alcool allylique (10,8 mmol), 0,55 g de triéthylamine (5,4 mmol), 0,13 g de 4-diméthylaminopyridine (1,1 mmol) et 10 ml d'éther. On laisse réagir 2 h à température ambiante. Le mélange réactionnel est filtré, lavé avec une solution aqueuse d'HCl 0,1 M, puis lavé avec une solution aqueuse de bicarbonate de potassium à 5%. La phase organique est évaporée pour donner 1,53 g de l'amide allylique de l'alcoxyamine AA-SG1 (rendement = 60%).

### Caractérisation du 2-[N-tertiobutyl-N-(1-diéthoxyphosphoryl-2,2-diméthylpropyl)aminoxy] propionate d'allyle:.

RMN ³¹P (121.59 MHz, CDCl₃) : 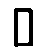 23.23 (s, Dia I, 80%). 22.61 (s, Dia II, 20%).
RMN ¹H (300 MHz, CDCl₃) : 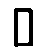 5.96-5.87 (m, 2H, dia I+II), 5.37-5.23 (m, 4H, dia I+II), 4.64-4.58 (m, 6H, dia I+II), 4.25-3.93 (m, 8H, dia I+II), 3.37 (d, J = 27 Hz, 1H, dia II), 3.27 (d, J = 24 Hz, dia I), 1.53 (d, J = 9 Hz, 3H, dia I), 1.50 (d, J = 6 Hz, 3H, dia II), 1.36-1.27 (m, 12H, dia I+II), 1.17 (s, 9H, dia II), 1.16 (s, 9H, dia I), 1.14 (s, 9H, dia II), 1.11 (s, 9H, dia I).
RMN ¹³C ( 75.54 MHz, CDCl3) : Dia I. 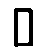 173.43 (s, CO), 131.69 (s, C-H=CH₂), 118.50 (s, CH=CH₂), 82.49 (s, CH-ON), 69.51 (d, J = 139.75 Hz, CH-P). 64.90 (s, O-CH₂-CH), 61.71 (d, J = 6.04 Hz, CH₂), 61.52 (s, N-C(CH₃)₃), 58.67 (d, J = 7.55 Hz, CH₂), 35.45 (d, J = 5.28 Hz, CH-C(CH₃)₃), 29.46 (d, J = 5.28 Hz, CH-C(CH₃)₃), 27.81 (s, N-C(CH₃)₃), 19.19 (s, CH-CH₃), 16.40 (d, J = 5.29 Hz, CH₂CH₃), 16.10 (d, J = 6.8 Hz, CH₂CH₃). Dia II. 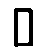 172.03 (s, CO), 132.06 (s, CH=CH₂), 117.97 (s, CH=CH₂), 82.49 (s, CH-ON),69.17 (d, J = 139.75 Hz, CH-P), 64.83 (s, O-CH₂-CH), 61.81 (d, J = 8.3 Hz, CH₂), 61.27 (s, N-C(CH₃)₃), 58.82 (d, J = 6.8 Hz, CH₂), 35.10 (d, J = 5.28 Hz, CH-C(CH₃)₃). 30.17 (d, J = 6.04 Hz, CH-C(CH₃)₃), 27.87 (s, N-C(CH₃)₃), 17.73 (s, CH-CH₃), 15.80 (d, J = 6.8 Hz, CH₂CH₃), 15.77 (d, J = 6.8 Hz, CH₂CH₃).

### Exemple 3 :

### Amidification de l'AA-S61

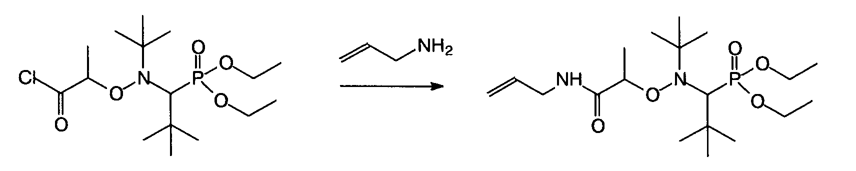

Le chlorure d'acide de l'alcoxyamine AA-SG1 est synthétisé de la même façon que dans l'exemple 2.
2,1 de chlorure d'acide (5,4 mmol) sont dissous dans 30 ml d'éther éthylique. A température ambiante, on ajoute un mélange contenant 0,62 g d'alllylamine (10,8 mmol), 0,55 g de triéthylamine (5,4 mmol), 0,13 g de 4-diméthylaminopyridine (1,1 mmol) et 10 ml d'éther. On laisse réagir 2 h à température ambiante. Le mélange réactionnel est filtré, lavé avec une solution aqueuse d'HCl 0,1 M, puis lavé avec une solution aqueuse de bicarbonate de potassium à 5%. La phase organique est évaporée pour donner 1,53 g de l'amide allylique de l'alcoxyamine AA-SG1 (rendement=70%)

### Caractérisation du 2-[N-tertiobutyl-N-(1-diéthoxyphosphoryl-2,2-diméthylpropyl) a-minoxyl propionamide de N-allyle:

RMN ³¹P (121.59 MHz, CDCl₃) : 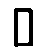 27.42 (s, Dia I, 35%). 27.05 (s, Dia II, 65%).
RMN ¹H (300 MHz, CDCl₃) : Dia I 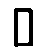 8.61 (b, NH, 1H), 5.96-5.83 (m, 1H), 5.19 (dq, J_{HH} = 1.5 Hz, J_{HH} = 18Hz, 1H), 5.08 (dq, J_{HH} = 1.5 Hz, J_{HH} = 9Hz, 1H), 4.48 (q, J = 6Hz, 1H), 4.29-3.97 (m, 5H), 3.67 (m, 1H), 3.35 (d, J = 27 Hz), 1.51 (d, J = 6 Hz, 3H), 1.35-1.28 (m, 6H), 1.21 (s, 9H), 1.08 (s, 9H). Dia II. 7.74 (b, NH, 1H), 5.96-5.83 (m, 1H), 5.21(d, J = 18 Hz, 1H), 205.11(d, J = 9 Hz, 1H), 4.51 (q, J = 9Hz, 1H), 4.20-3.95 (m, 5H), 3.88 (t, J = 7.5Hz, 1H), 3.28 (d, J = 24 Hz), 1.63 (d, J = 6 Hz, 3H), 1.36-1.28 (m, 6H), 1.25 (s, 9H), 1.24 (s, 9H).
RMN ¹³C ( 75.54 MHz, CDCl₃) : Dia I. 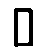 173.55 (s, CO), 134.40 (s, CH=CH₂), 115.18 (s, CH=CH₂), 81.76 (s, CH-ON), 68.56 (d, J = 137.48 Hz, CH-P), 62.17 (s, N-C(CH₃)₃), 61.56 (d, J = 6.04 Hz, CH₂), 59.64 (d, J = 7.55 Hz, CH₂), 41.06 (s, N-CH₂), 35.36 (d, J = 5.28 Hz, CH-C(CH₃)₃), 29.69 (d, J = 6.04 Hz, CH-C(CH₃)₃), 28.15 (s, N-C(CH₃)₃), 19.21 (s, CH-CH₃), 16.25 (d, J = 6.04 Hz, CH₂CH3), 15.91 (d, J = 6.8 Hz, CH₂CH₃). Dia II. 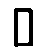 173.42 (s, CO), 134.27 (s, CH=CH₂), 116.30 (s, CH=CH₂), 83.05 (s, CH-ON), 69.25 (d, J = 137.48 Hz, CH-P), 62.85 (s, N-C(CH₃)₃), 61.55 (d, J = 6.04 Hz, CH₂), 60.04 (d, J = 7.55 Hz, CH₂), 41.46 (s, N-CH₂), 35.33 (d, J = 5.28 Hz, CH-C(CH₃)₃), 30.06 (d, J = 5.28 Hz, CH-C(CH₃)₃). 28.38 (s, N-C(CH₃)₃), 19.55 (s, CH-CH₃), 16.55 (d, J = 6.80 Hz, CH₂CH3), 16.30 (d, J = 6.8 Hz, CH₂CH₃).

### Exemple 4:

### Préparation de l'alcoxyamine acide 2-méthyl-2[N-tertiobutyl-N-(1-diéthoxyphophoryl-2,2-diméthylpropyl)aminoxy]propionique) nommé acide méthyl-propionique-SG1.

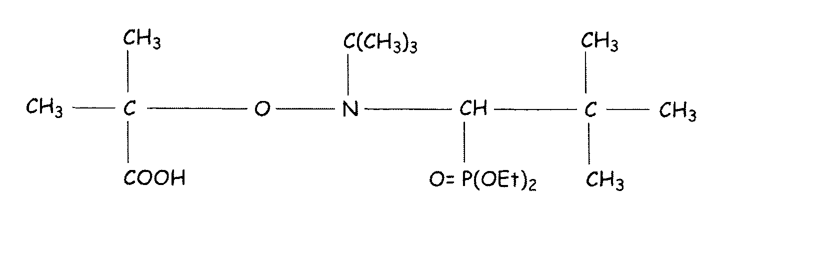

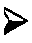 mode opératoire:

Dans un réacteur en verre de 2 l purgé à l'azote, on introduit 500 ml de toluène dégazé, 35,9 g de CuBr (250 mmol), 15,9 g de cuivre en poudre (250 mmol), 86,7 g de N,N,N',N',N"-pentciméthyl-diéthylènetriamine-PMDETA-(500 mmol) puis, sous agitation et à température ambiante (20°C), on introduit un mélange (une solution) contenant 500 ml de toluène dégazé, 42,1 g d'acide 2-bromo-2-méthylpropionique (250 mmol) et 78,9 g de SG1 à 84 % soit 225 mmol.

On laisse réagir 90 minutes à température ambiante et sous agitation, puis on filtre le milieu réactionnel. Le filtrat toluénique est lavé deux fois avec 1,5 1 d'une solution aqueuse saturée en NH₄Cl.

On obtient un solide jaunâtre qui est lavé au pentane pour donner 51 g de N-tertiobutyl, N-1-diéthyl-phosphono-2,2-diméthylpropyl, O-1-carboxyméthyléthylhydroxylamine (rendement 60 %).

Les résultats analytiques sont donnés ci-après:
- masse molaire déterminée par spectrométrie de masse : 381,44 / g.mol⁻¹ (pour C₁₇H₃₆NO₆P)
- analyse élémentaire (formule brute : C₁₇H₃₆NO₆P):
   % calculé : C=53,53, H=9,51, N=3,67
   % trouvé : C=53,57, H=9,28, N=3,77
- fusion effectuée sur appareil Büchi B-540 : 124°C / 125°C

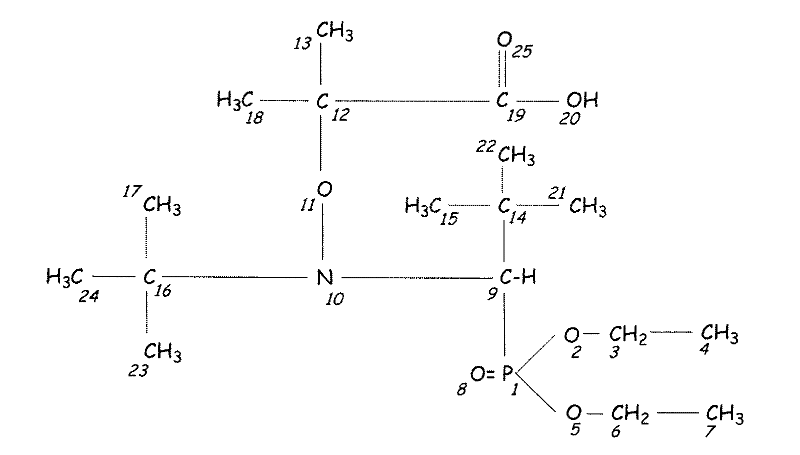

• RMN³¹P(CDCl₃) : δ 27,7
• RMN ¹H (CDCl₃) :
δ 1,15 (singulet, 9H sur carbones 15, 21 et 22),
δ 1,24 (singulet, 9H sur carbones 17, 23 et 24),
δ 1,33-1,36 (multiplet, 6H sur carbones 4 et 7),
δ 1,61 (multiplet, 3H sur carbone 18),
δ 1,78 (multiplet, 3H sur carbone 13),
δ 3,41 (doublet, 1H sur carbone 9),
δ 3,98-4,98 (multiplet, 4H sur carbone 3 et 6)
δ 11,8 (singulet ―OH).

• RMN ¹³C (CDCl₃):

| N° atome de carbone | δ |
|---|---|
| 3 et 6 | 60,28 - 63,32 |
| 9 | 69,86 |
| 12 | 63 |
| 13 | 28,51 |
| 14 | 36,04 |
| 15, 21 et 22 | 29,75 |
| 16 | 63,31 |
| 17, 23 et 24 | 28,74 |
| 18 | 24,08 |
| 19 | 176,70 |

### Exemple 5 :

### Synthèse d'une dialcoxyamine à partir de l'alcoxyamine acide méthylpropionique SG1.

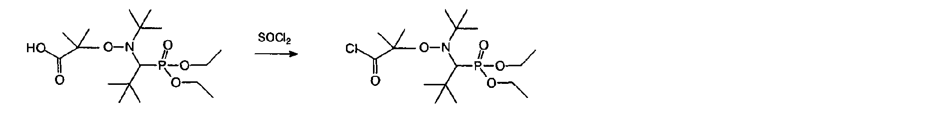

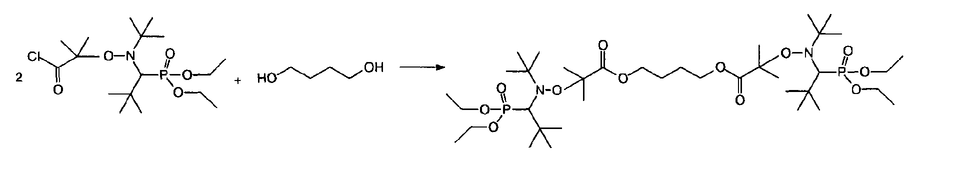

L'alcoxyamine acide méthyl-propionique-SG1 est préparée selon l'exemple 4.

Dans un réacteur de 250 ml purgé à l'azote, on introduit 10 g d'alcoxyamine acide méthyl-propionique-SG1 (26 mmol) et 50 ml de dichlorométhane (séché sur hydrure de calcium). A température ambiante, on ajoute par une ampoule de coulée 6,2 g de SOCl₂ (52 mmol). On laisse réagir 2 h à température ambiante sous agitation et sous léger courant d'azote. On évapore sous vide pour éliminer l'excès de SOCl₂ et le solvant. On obtient le chlorure d'acide de l'alcoxyamine qui est utilisé dans la suite sans purification supplémentaire.

L'huile résultante est redissoute dans 50 ml de dichlorométhane sec. Sous atmosphère d'azote, on introduit dans l'ampoule de coulée un mélange contenant 1,2 g de 1,4-butanediol (13 mmol), 2,6 g de triéthylamine (26 mmol) et 0,3 g de 4-diméthylaminopyridine (2,6 mmol) dissous dans 10 ml de diclorométhane. Le mélange précédent est coulé goutte à goutte dans le réacteur, puis on laisse réagir 3 heures à température ambiante. Le mélange réactionnel est filtré, puis lavé avec une solution de KHCO₃, puis lavé à l'eau. La phase organique est récupérée, séchée sur sulfate de magnésium et évaporée à sec sous vide à température ambiante. On obtient un solide qui est lavé au pentane froid pour donner 5,2 g de dialcoxyamine (rendement=50%).

La caractérisation de la dialcoxyamine a été réalisée par RMN du proton, du carbone 13 et du phosphore.
RMN ³¹P (CDCl₃) : δ = 26 ppm

### Exemple 6:

### Couplage entre l'alcoxyamine acide méthyl-propionique-SG1 et un bloc POE-Ome (Mn = 750 g.mol⁻¹):

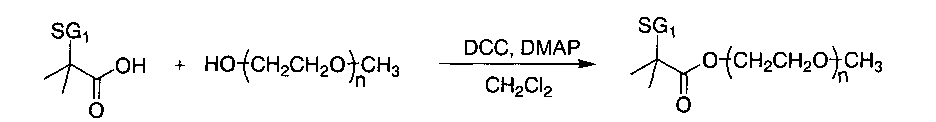

Dans un ballon muni d'un agitateur magnétique et d'un réfrigérant, on place l'alcoxyamine méthyl-propionique-SG1 (1 équivalent), le poly(oxyde d'éthylène)-α-méthoxylé (1 équivalent) et la 4-diméthylaminopyridine (DMAP) (1 équivalent) dans du dichlorométhane anhydre. La solution est dégazée par barbotage d'azote pendant 10 à 15 minutes. La dicyclohexylcarbodiimide (DCC) (2.6 équivalents), dissout dans le minimum de dichlorométhane, est ajoutée au mélange à l'aide d'une seringue. Le mélange est laissé sous agitation 3 h à 0°C. Le POE-OMe résiduel est éliminé par précipitation sélective dans l'éthanol. Le filtrat est évaporé sous vide. Le taux de couplage déterminé par RMN proton est de 37%.

## Revendications

1. Alcoxyamines de formule (I): 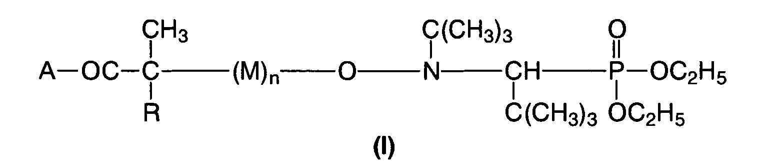 dans laquelle A représente un radical hydroxy ; un radical MeO- dans lequel Me représente un métal alcalin tel que Li, Na, K, un radical H₄N⁺-, Bu₄N⁺-, Bu₃HN⁺- ; un atome de chlore ; R représente un atome d'hydrogène ou bien un radical méthyle ; M est un enchaînement de monomères vinyliques polymérisables par voie radicalaire ; n est un nombre entier pouvant être égal à 0.

2. Alcoxyamines de formule (I) dans lesquelles M est le styrène, les styrènes substitués, les diènes, les monomères acryliques comme l'acide acrylique ou les acrylates d'alkyle, les monomères méthacryliques comme l'acide méthacrylique ou les méthacrylates d'alkyle, l'acrylonitrile, l'acrylamide et ses dérivés, la vinylpyrrolidinone ou encore un mélange d'au moins deux monomères précités

3. L'acide 2-[N-tertiobutyl-N-(1-diéthoxyphosphoryl-2,2-diméthylpropyl)aminoxy] propionique:

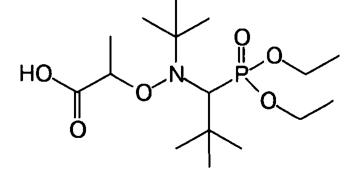

4. Le chlorure de l'acide 2-[N-tertiobutyl-N-(1-diéthoxyphosphoryl-2,2-diméthylpropyl)aminoxy] propionique :

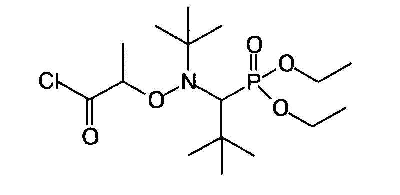

5. L'acide 2-méthyl-2-[N-tertiobutyl-N-(1-diéthoxyphosphoryl-2,2-diméthylpropyl) aminoxy] propionique :

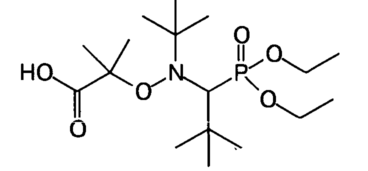

6. Le chlorure de l'acide 2-méthyl-2-[N-tertiobutyl-N-(1-diéthoxyphosphoryl-2,2-diméthylpropyl)aminoxy] propionique :

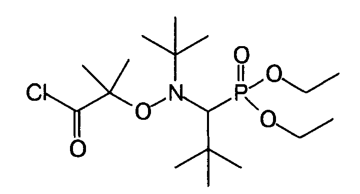

7. Utilisation, pour la préparation de mono- ou polyalcoxyamines polymérisées ou non de formule (II): 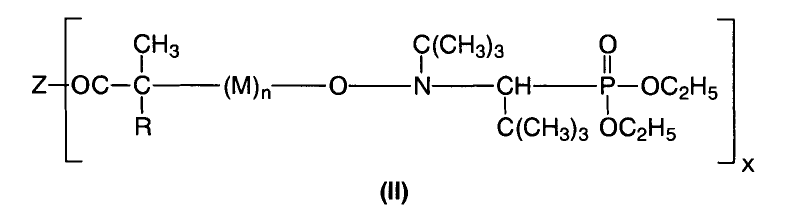 dans laquelle R et n ont la même signification que dans la formule (I) ; x est un nombre entier au moins égal à 1 ; Z représente une structure mono- ou polyfonctionnelle choisie parmi les structures ci-après données à titre non limitatif : CH₂=CH-CH₂-O- , CH₂=CH-CH₂-NH-, CH₃-(OCH₂CH₂)_{P}-O-, -O-(CH₂)_{q}-O-, p et q étant des nombres entiers au moins égal à un, ou provenant de composés de type alcools, polyols, amines, polyamines, époxydes, polyépoxydes, esters, polyesters, amides, polyamides, imines, polyimines, polycarbonates, polyuréthanes, silicones;
des alcoxyamines de formule (I): 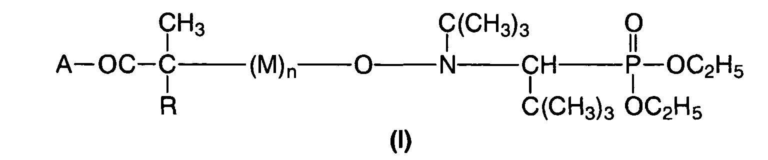 dans laquelle A représente un radical hydroxy, un radical R¹O- dans lequel R¹ représente un reste alkyle, linéaire ou ramifié, ayant un nombre d'atome de carbone allant de 1 à 6 ; un radical MeO- dans lequel Me représente un métal alcalin tel que Li, Na, K, un radical H₄N⁺-, Bu₄N⁺-, Bu₃HN⁺- ; un atome de chlore; R représente un atome d'hydrogène ou bien un radical méthyle ; M est un enchaînement de monomères vinyliques polymérisables par voie radicalaire ; n est un nombre entier pouvant être égal à 0.

8. Utilisation selon la revendication 8 **caractérisée en ce que** M est est le styrène, les styrènes substitués, les diènes, les monomères acryliques comme l'acide acrylique ou les acrylates d'alkyle, les monomères méthacryliques comme l'acide méthacrylique ou les méthacrylates d'alkyle, l'acrylonitrile, l'acrylamide et ses dérivés, la vinylpyrrolidinone ou encore un mélange d'au moins deux monomères précités.

9. Utilisation selon la revendication 7 ou 8 pour obtenir le 2-[N-tertiobutyl-N-(1-diéthoxyphosphoryl-2,2-diméthylpropyl)aminoxylpropionate d'allyle :

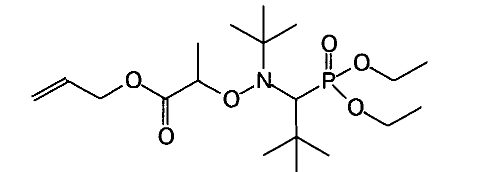

10. Utilisation selon la revendication 7 ou 8 pour obtenir le 2-[N-tertiobutyl-N-(1-diéthoxyphosphoryl-2,2-diméthylpropyl)aminoxy]propionamide de N-allyle:

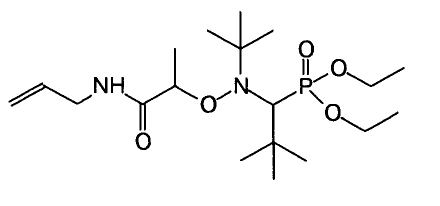

11. Utilisation selon la revendication 7 ou 8 pour obtenir une dialcoxyamine de formule:

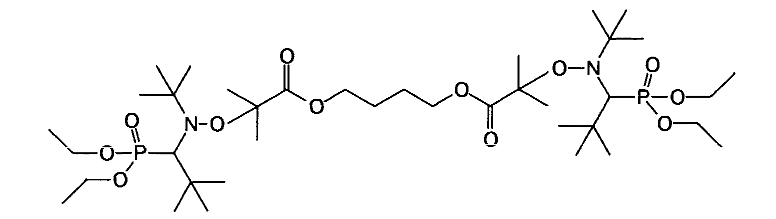

12. Utilisation selon la revendication 7 ou 8 pour obtenir un composé de formule (II) dans laquelle x=1, n=0, R=CH₃ et Z=CH₃(OCH₂CH₂)ₚO-.
